# EUROPEAN PATENT APPLICATION

(11) **EP 3 409 707 A1**
(43) Date of publication of application: **05.12.2018**
(21) Application number: 17173451.0
(22) Date of filing: 30.05.2017
(51) Int. Cl.: C08G 63/685, C08G 63/91, C09J 163/00

(54) **METHOD FOR PRODUCING FUNCTIONALIZED POLYESTERS**

(71) Applicant: Henkel AG & Co. KGaA, 40589 Düsseldorf (DE)
(72) Inventor: FLORES-PENALBA, Sonia, 08290 Cerdanyola del Vallés, Barcelona (ES); PARADAS, Miguel, 08100 Mollet del Vallés, Barcelona (ES); GARCIA-MIRALLES, José, 40217 Düsseldorf (DE); KINZELMANN, Hans-Georg, 50259 Pulheim (DE); SEBASTIÁN PÉREZ, Rosa Maria, 08291 Ripollet, Barcelona (ES); MARQUET CORTÉS, Jordi, 08304 Barcelona (ES); AGUILERA CORROCHANO, Jorge, 08202 Sabadell, Barcelona (ES); GAGO, Elena, 08036 Barcelona (ES); HÉMERY, Thérèse, 40591 Düsseldorf (DE)

(57) **Abstract**

The present application is directed to a method for preparing an amino and hydroxyl-functional polyester, said method comprising: i) preparing an unsaturated polyester by the polycondensation reaction, optionally in the presence of a catalyst, of reactants comprising or consisting of at least one diol and at least one α,β-ethylenically unsaturated dicarboxylic acid or anhydride thereof, wherein said polycondensation reaction is characterized by a stoichiometric excess of hydroxyl groups to carboxyl groups; and, ii) reacting, by conjugate addition, said unsaturated polyester with at least one polyamine, said polyamine having at least one primary amine group and at least one secondary amine group.

## Description

### FIELD OF THE INVENTION

The present application is directed to a method for producing functionalized polyesters. More particularly, the application is directed to method for producing amino- and hydroxyl-functionalized polyesters and to the use of said polyesters in coating, adhesive or sealant compositions.

### BACKGROUND TO THE INVENTION

Diamines, triamines and higher functionality polyamines are versatile and commonly used curatives that can react with a variety of polymeric or resinous systems: for illustrative purposes only, compositions based on epoxy resins, polyisocyanates and cyclic carbonates can be cured with polyamines. Problematically, however, most low molecular aliphatic polyamines are volatile, possess limited supplementary functionalization and provide only limited contribution to the mechanical properties of the cured systems. Further, such low molecular weight polyamines present numerous health hazards - such as acute toxicity, irritation and dermal and pulmonary sensitization - as mentioned in Sullivan et al. (Ed.) Clinical Environmental Health and Toxic Exposures 2nd Edition (2001) and Tarvainen et al. Journal of Environmental Medicine (1999) 1.1.3.

The present invention is concerned with the development of polymeric amino-curatives which: possess a polyester backbone; are stable, non-volatile liquids at room temperature; and, can contribute to the mechanical properties of the final curable composition. In developing higher molecular weight amino-curatives, the present invention seeks to mitigate those environmental health concerns related to the migration and diffusion of amines in fluid systems.

US Patent No. 3,715,335 (Backsai) describes polymers possessing a linear polyester backbone to which side chains are attached through an amine linkage, said side chains consisting of linear or cyclic alkylene groups of 2 to 6 carbon atoms and having a glycidyl quaternary ammonium halide group attached thereto. The functionalized polymers are obtained by: i) the reaction of α,β-unsaturated moieties of a polyester with a primary-tertiary diamine, such as 3-dimethylamino propylamine; and, ii) quaternization of the intermediate product with epichlorohydrin. The quaternization reaction is carried out in solvent in order to avoid gelation of the viscous, intermediate product.

US Patent No. 4,769,436 (Beck et al.) describes a process for the manufacture of polyester polyols with amino and amide groups. In said process, unsaturated polyester polyols, optionally in admixture with saturated polyester polyols, are reacted with low molecular weight, aliphatic polyamines having two primary amino groups. The use of polyamine reagents of the formula NH₂-R¹-(NH-R¹)ₙ-NH₂ is also reported. However, where only unsaturated polyester polyols are used as the starting components of the described process, solid reaction products are obtained: to provide these solid products with utility in adhesive formulations they must be diluted with miscible, fluid, saturated, unmodified polyester polyols.

CA 2,111,927 A1 (Bayer AG) describes a process for the production of polyester resins containing from 0 to 10% by weight of hydroxyl groups and from 0.01 to 9%, by weight of nitrogen in the form of primary and / or secondary amino groups. The described process comprises reacting in an addition reaction at a temperature of from 0 to 120°C: i) polyester resins having a molecular weight (Mn) of 286 to 10,000 and containing at least 2 structural units of the formula -O-C(O)-CH=CH-C(O)-O- and, optionally, alcoholic hydroxyl groups; and, ii) ammonia or primary monoamines R-NH₂ wherein R represents an aliphatic, cycloaliphatic or araliphatic radical optionally containing ether oxygen atoms and / or hydroxyl groups.

US 2012225991 A1 (Shalati et al.) relates to amino and hydroxyl-functional polyesters, wherein the amine is in the form of aspartic acid esters functionality, and wherein the amino and hydroxyl-functional polyesters have: (a) a molecular weight (Mn) of at least about 500 g/mol; (b) an acid value of about 5 or less; (c) a hydroxyl value of about 30 or more; (d) an amine value of about 30 or more; and, (e) an amine functionality of less than 1.8. The process for preparing the described amino and hydroxyl-functional polyesters comprises: providing an hydroxyl functional polyester comprising at least one of maleate and fumarate unsaturation; and, reacting said maleate and fumarate unsaturation with an aliphatic or aromatic, primary mono-amine.

### STATEMENT OF THE INVENTION

In accordance with a first aspect of the present invention, there is provided a method for preparing an amino-functional polyester, said method comprising:
i) preparing an unsaturated polyester by the polycondensation reaction, optionally in the presence of a catalyst, of reactants comprising or consisting of at least one diol and at least one α,β-ethylenically unsaturated dicarboxylic acid or anhydride thereof, wherein said polycondensation reaction is characterized by a stoichiometric excess of hydroxyl groups to carboxyl groups; and,
ii) reacting, by conjugate addition, said unsaturated polyester with at least one polyamine, said polyamine having at least one primary amine group and at least one secondary amine group.

The amino- and hydroxyl-functional functional polyesters obtained in accordance with this process are characterized by being fluid and by having at least one terminal hydroxyl group. The obtained polyesters are moreover stable.

It will be recognized that the employment of a catalyst in the polycondensation reaction of stage i) is often desirable. It has also been found effective to conduct the polycondensation reaction in the presence of a stabilizer for the unsaturated polyester, said stabilizer preferably being selected from the group consisting of: 2,3-dichloro-1,4-naphthoquinone; 2,3-dibromo-1,4-naphthoquinone; 2,3-dicyano-1,4-naphthoquinone; 2-chloro-1,4-naphthoquinone; 2-bromo-1,4-naphthoquinone; 2-nitro-1,4-naphthoquinone; 2,3,6,7,8,9-hexachloro-1,4-naphthoquinone; 3-bromo-2-chloro-1,4-naphthoquinone; 1,4-hydroquinone; 4-tertiary-butylcatechol; 4-methoxyphenol; methylhydroquinone; 4-chloro-2-nitrophenol; 2,4-dinitropara-cresol; 2,4-dinitrophenol; phenothiazine; and, mixtures thereof.

The or each reactant diol in the polycondensation reaction should typically have a molecular weight of from 62 to 5000 g/mol and may optionally contain ether groups, ester groups and / or carbonate groups. In an interesting but non-limiting embodiment, at least one reactant diol is a polyoxyalkylene glycol and, more particularly, at least one reactant diol is selected from the group consisting of: diethylene glycol; dipropylene glycol; triethylene glycol; tetraethylene glycol; tripropylene glycol; and, tetrapropylene glycol.

The or each reactant α,β-ethylenically unsaturated dicarboxylic acid or anhydride thereof in the polycondensation reaction should typically have from 4 to 12 carbon atoms. Good results have, for instance, been obtained where at least one reactant α,β-ethylenically unsaturated dicarboxylic acid or anhydride is selected from the group consisting of: maleic acid; maleic anhydride; fumaric acid; itaconic acid; and, itaconic anhydride.

The presence of further reactants in the polycondensation reaction - in addition to said diols and said α,β-ethylenically unsaturated dicarboxylic acids or anhydrides thereof - is not precluded. As such, an illustrative reaction mixture for said polycondensation reaction might comprise or consist of:
said at least one diol;
said at least one α,β-ethylenically unsaturated dicarboxylic acid or anhydride thereof;
from 0 to 30 mol.%, based on the number of moles of α,β-ethylenically unsaturated dicarboxylic acids, of saturated dicarboxylic acid or the anhydride thereof;
from 0 to 30 mol.%, based on the number of moles of α,β-ethylenically unsaturated dicarboxylic acids, of aromatic dicarboxylic acid or the anhydride thereof;
from 0 to 10 mol.%, based on the number of moles of α,β-ethylenically unsaturated dicarboxylic acids, of dihydroxymonocarboxylic acid, wherein each hydroxyl group of said dihydroxymonocarboxylic acid may independently be primary or secondary hydroxyl;
from 0 to 10 mol.%, based on the number of moles of diol, of trifunctional and / or tetrafunctional hydroxy compounds; and
from 0 to 5 mol.%, based on the number of moles of diol, of mono-alcohol.

It will be recognized that the intermediate, unsaturated polyester derived from stage i) above can be provided at a range of molecular weights: the molecular weight and structure of the obtained unsaturated polyester will be an important determinant of the molecular weight and structure of the functional polyester obtained after stage ii). An exemplary, unsaturated polyester prepared in stage i) is characterized by at least one of:
a) an hydroxyl value (OHv) of from 50 to 300 mgKOH/g, preferably from 80 to 200 mgKOH/g;
b) an acid value (Av) of from 0 to 10 mgKOH/g, preferably from 0 to 3 mgKOH/g; and,
c) a calculated double bond equivalent weight of from 100 to 1500 g/eq, preferably from 150 to 850 g/eq.

In the conjugate addition reaction of stage ii) of the recited process, the or each reactant polyamine having at least one primary amine group and at least one secondary amine group is preferably selected from the group consisting of aliphatic polyamines, cycloaliphatic polyamines and mixtures thereof. In a particularly interesting embodiment of the conjugate addition reaction, at least one reactant polyamine has one primary amine group and one secondary amine group and is preferably selected from the group consisting of aliphatic diamines, cycloaliphatic diamines and mixtures thereof.

In particularly effective embodiments of stage ii), reactant polyamine is provided to said conjugate addition reaction in an amount such that the equivalence ratio of primary amine groups to C=C double bonds of the unsaturated polyester is in the range from 0.9: 1 to 1.2:1.

The present invention provides a process in which either stage i), stage ii) or both of stages i) and ii) can be performed in essentially solvent free conditions. It further provides a straightforward process for the synthesis of fluid amino- and hydroxyl functional polyesters. When the obtained polymers are employed as an amino curative, the polyester backbone becomes incorporated into the cured products and thus contributes to the thermal and mechanical stability thereof.

In accordance with a second aspect of the present invention, there is provided an amino- and hydroxyl-functional polyester obtainable by the method defined herein above and in the appended claims, said polyester preferably being characterized by at least one of:
i) a weight average molecular weight of from 500 to 5000 g/mol, preferably from 800 to 4000 g/mol;
ii) an amine value (NHv) of from 30 to 350 mg KOH/g, preferably from 40 to 250 mg KOH/g; and,
iii) a total hydroxyl and amine value (or alkaline value, OHv+NHv) of from 50 to 500 mg KOH/g, preferably from 80 to 400 mg KOH/g.

For completeness, it is noted that these limitations are not mutually exclusive and one, two or three of these characterizations may thus be applicable.

In accordance with a third aspect of the present invention, there is provided a curable coating, adhesive or sealant composition comprising: an amino- and hydroxyl-functional polyester as defined herein above and in the appended claims; and, at least one multifunctional compound (H) having at least two functional groups (F) selected from the group consisting of: epoxy groups; isocyanate groups; and cyclic carbonate groups.

### DEFINITIONS

As used herein, the singular forms "*a*", "*an*" and "*the*" include plural referents unless the context clearly dictates otherwise.

The terms "*comprising*"*,* "*comprises*" and "*comprised* of" as used herein are synonymous with "*including*", "*includes*"*,* "*containing*" or "*contains*"*,* and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The terms "*preferred*"*,* "*preferably*"*,* "*desirably*"*, "in particular*" and "*particularly*" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

The molecular weights given in the present text refer to weight average molecular weights (Mw), unless otherwise stipulated. All molecular weight data refer to values obtained by gel permeation chromatography (GPC), unless otherwise stipulated.

The "*acid value*" or "*acid number*" is a measure of the amount of free acid present in a compound: the acid value is the number of milligrams of potassium hydroxide required for the neutralization of free acid present in one gram of a substance (mg KOH/g). Any measured acid values given herein have been determined in accordance with German Standard DIN 53402.

Unless otherwise stated, OH values given herein were obtained following Deutsche (DGF) Einheitsmethoden zur Untersuchung von Fetten, Fettprodukten, Tensiden und verwandten Stoffen (Gesamtinhaltsverzeichnis 2016) C-V 17b (53).

Unless otherwise stated, the amine values given were obtained by titration with 0.1 N hydrochloric acid - in accordance with ASTM D2572-91 - and thereafter calculated back to mg KOH/g.

Having regard to the amino and hydroxyl functional polyesters, the total hydroxyl and amine value (OHv+NHv) was measured in an established manner, specifically wherein the hydroxyl and amine groups were reacted with an excess of acetic acid anhydride, and the resulting free acetic acid group was back titrated with KOH to assess the total millimolar amount of hydroxy and amine groups in 1 gram of sample. The amine value *per se* was assessed by titration with 0.1 N hydrochloric acid - in accordance with ASTM D2572-91 - and thereafter calculated back to mg KOH/g. The hydroxyl value was calculated based on the determined amine value and the determined total amine and hydroxyl value.

When used herein, the total unsaturation degree (meq/g) is intended to mean that amount (mmol) of unsaturated groups contained per 1 g of a compound, as measured in accordance with JIS K1557 6.7.

As used herein, room temperature is 23°C plus or minus 2°C.

The expression "*based on the total weight of the reactants*" is used herein to refer to the total weight of the reactants in a singular reaction stage.

As used herein, the term "*equivalent (eq.")* relates, as is usual in chemical notation, to the relative number of reactive groups present in the reaction; the term "*milliequivalent*" (*meq*) is one thousandth (10⁻³) of a chemical equivalent.

The term "*equivalent weight*" as used herein refers to the molecular weight divided by the number of a function concerned. As such, "*epoxy equivalent weight*" (EEW) means the weight of resin, in grams, that contains one equivalent of epoxy.

As used herein, the term "*aromatic group*" means a mono- or polynuclear aromatic hydrocarbon group.

As used herein, "*alkyl group*" refers to a monovalent group that is a radical of an alkane and includes straight-chain and branched organic groups, which groups may be substituted or unsubstituted.

Specifically, as used herein, "*C₁-C₆alkyl*" group refers to an alkyl group that contains 1 to 6 carbon atoms. Examples of alkyl groups include, but are not limited to: methyl; ethyl; propyl; isopropyl; n-butyl; isobutyl; sec-butyl; tert-butyl; n-pentyl; and, n-hexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-6 carbon atoms (C₁-C₆ alkyl) - for example unsubstituted alkyl groups containing from 1 to 4 carbon atoms (C₁-C₄ alkyl) or 1 or 2 carbon atoms (C₁-C₂ alkyl) - should be noted.

As used herein, "*C₁-C₂₀ alkylene*" means a divalent linear or branched, saturated hydrocarbon radical having from 1 to 20 carbon atoms, which radical may be substituted or unsubstituted. For completeness, suitable substituents are those mentioned herein above in the definition of alkyl groups. In general, a preference for alkylene radicals having 1-12 carbon atoms (C₁-C₁₂ alkylene) - for example radicals having from 1 to 8 carbon atoms (C₁-C₈ alkylene) - should be noted. And non-limiting examples thereof include methylene, ethylene, trimethylene, propylene, tetramethylene and pentamethylene.

As used herein, *"C₃-C₂₀ cycloalkylene*" means a divalent radical which possesses a saturated monocyclic or saturated bicyclic ring structure having from 3 to 20 carbon atoms, which radical may be substituted or unsubstituted.

As used herein, "*C₆ to C₂₀ arylene*" means an organic radical derived from an aromatic hydrocarbon which possesses a single or fused ring system and which has from 6 to 20 carbons atoms *in toto*: each said ring of the radical may have from 4 to 7 ring atoms and preferably 5 or 6 ring atoms. Non-limiting examples of such arylene radicals include phenylene, naphthylene and biphenylene.

As used herein, *"C₄-C₂₀ alkenyl"* group refers to an aliphatic carbon group that contains 4 to 20 carbon atoms and at least one double bond. Like the aforementioned alkyl group, an alkenyl group can be straight or branched, and may optionally be substituted. The term "*alkenyl*" also encompasses radicals having "cis" and "trans" configurations, or alternatively, "E" and "Z" configurations, as appreciated by those of ordinary skill in the art. In general, however, a preference for unsubstituted alkenyl groups containing from 4 to 18 (C₄₋₁₈) or 4 to 12 (C₂₋₁₂) carbon atoms should be noted. And Examples of C₄-C₂₀ alkenyl groups include, but are not limited to: 2-butenyl; 4-methylbutenyl; 1-pentenyl, 2-pentenyl, 3-pentenyl, 4-pentenyl, 4-methyl-3-pentenyl, 1-hexenyl, 3-hexenyl, 5-hexenyl, 1-heptenyl, 1-octenyl and n-dodecenyl.

As used herein, "*polyol*" refers to any compound comprising two or more hydroxyl groups. The term thus encompasses diols, triols and compounds containing four or more -OH groups.

References to carboxylic acids herein are deemed to include the anhydride of said acids unless clearly stated otherwise.

The term "*epoxide compound*" denotes monoepoxide compounds, polyepoxide compounds and epoxide functional prepolymers. The term "*polyepoxide compound*" is thus intended to denote epoxide compounds having at least two epoxy groups. Further, the term "*diepoxide compound*" is thus intended to denote epoxide compounds having two epoxy groups.

As used herein "*polyisocyanate*" means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethylcyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term "*aromatic polyisocyanate*" is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

It is noted that the term "*polyisocyanate*" is intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s).

For completeness: a) a primary amine group is an atomic grouping of the type "-NH₂" (R-H); (b) a secondary amine group is an atomic grouping of the type "-NHR"; and, c) a tertiary amine group is an atomic grouping of the type "-NR₂". An amino-functional polymer means a polymer possessing at least one amine group.

As used herein, the term "*catalytic amount*" means a sub-stoichiometric amount of catalyst relative to a reactant.

The term "*essentially free*" is intended to mean herein that the applicable group, compound, mixture or component constitutes less than 0.1 wt.%, based on the weight of the defined composition.

### DETAILED DESCRIPTION OF THE INVENTION

### Synthesis Stage i)

The unsaturated polyester of the present invention is prepared by the polycondensation reaction of an α,β-ethylenically unsaturated dicarboxylic acid (or an anhydride thereof) with a diol. This statement does not preclude the presence of further reactants in the polycondensation reaction, as described below.

Generally, the reactant α,β-ethylenically unsaturated dicarboxylic acids - or anhydrides thereof - will have from 4 to 12 carbon atoms. And examples of such α,β-ethylenically unsaturated dicarboxylic acid include: maleic acid; fumaric acid; itaconic acid; citraconic acid; mesaconic acid; tetraconic acid; glutaconic acid; 2-decendioic acid; dodec-2-enedioic acid; glutinic acid; and, muconic acid. A preliminary preference exists for the use of C4 to C10 α,β-ethylenically mono-unsaturated dicarboxylic acids. A particular preference for use of at least one of maleic acid, maleic anhydride, fumaric acid, itaconic acid and itaconic anhydride might be noted.

The reactant diols may be aliphatic, cycloaliphatic or aromatic. By aromatic diols are meant those in which two hydroxyl groups are linked either to one aromatic hydrocarbon radical or to different aromatic hydrocarbon radicals.

Suitable diols having two aliphatic hydroxyl groups may have a molecular weight of 62 to 5000 g/mol and may optionally contain ether groups, ester groups and / or carbonate groups. Examples of such diols include: ethylene glycol; 1,2-propanediol; 2-methyl-1,3-propanediol; 2-butyl-2-ethyl-1,3-propanediol; 2,2-diethyl-1,3-propanediol; 1,3- and 1,4-butanediol; 1,5-pentanediol; 2,2,4-trimethyl-1,3-pentanediol; neopentyl glycol; 2-methyl-2,4-pentanediol; 1,6-hexanediol; 2-ethyl-1,3-hexanediol; 1,2-dihydroxycyclohexane; 1,4-cyclohexanedimethanol; 1,12-dodecanediol; polyoxalkylene glycols, such as diethylene glycol, dipropylene glycol, triethylene glycol, tetraethylene glycol, tripropylene glycol and tetrapropylene glycol; hydroxypivalyl hydroxy pivalate; 1,2,3-propantriol polymer with methyl oxirane; trimethylolropane polymer with methyl oxirane; polycarbonate diols; polyester diols; dimeric fatty alcohols; β-hydroxyalkylated, especially β-hydroxyethylated bisphenols; aromatic-aliphatic diols, such as p-xylylene glycol or 2,5-dichloro-p-xylylene glycol and 2,2-(β-hydroxyethoxyphenyl)propane; and, mixtures thereof.

A further group of suitable aliphatic diols, which may be used independently of or in admixture with the above mentioned diols, are the heterocyclic diols described *inter alia* in: DE 1812003 A1; DE 2342432 A1; DE 2342372 A1; and, DE 2453326 A1. Examples thereof include: N,N'-bis-(β-hydroxyethyl-5,5-dimethyl)hydantoin; N,N'-bis-(β-hydroxypropyl-5,5-dimethyl)hydantoin; methylene-bis-[N,N'-(β-hydroxyethyl)-5-methyl-5-ethylhydantoin]; methylene-bis-[N-(β-hydroxyethyl)-5,5-dimethylhydantoin]; and, N,N'-bis-(β-hydroxyethyl)benzimidazolone.

Suitable diols having two aromatic hydroxyl groups are generally mononuclear diphenols or binuclear diphenols which carry a hydroxyl group at each aromatic nucleus. In addition to hydroquinone (benzene-1,4-diol), mention may be made of those bisphenols conforming to the following general formula: 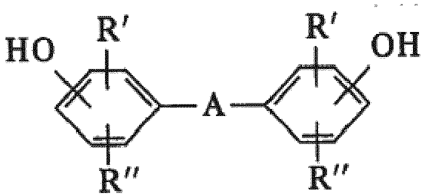 wherein:
hydroxyl groups may be in the meta-position, but are preferably in the para-position;
R' and R" are independently of one another hydrogen, C1-C6 alkyl or a halogen atom; and,
A is: a covalent bond; O; S; a divalent functional group selected from sulfoxide and carbonyl; or, a divalent radical selected from C1-C20 alkylene groups, C3-C20 cycloalkylene groups and C6-C20 arylene groups.

Without intention to limit the present invention, examples of suitable bisphenols include: bis-(p-hydroxyphenyl) ether or thioether; bis-(p-hydroxyphenyl)sulfone; bis-(p-hydroxyphenyl)methane; 1,2-bis-(p-hydroxyphenyl)ethane; 1 -phenyl-bis-(p-hydroxyphenyl)methane; diphenyl-bis-(p-hydroxyphenyl)methane; diphenyl-bis-(p-hydroxyphenyl)methane; 2,2-bis-(4'-hydroxy-3'-dimethylphenyl)propane; 1,1- or 2,2-bis-(p-hydroxyphenyl)butane; 1,1-dichloro- or 1,1,1-trichloro-2,2-bis-(p-hydroxyphenyl)ethane; 1,1-bis-(p-hydroxyphenyl)cyclopentane; 2,2-bis-(p-hydroxyphenyl)propane (bisphenol A); and, 1,1-bis-(p-hydroxyphenyl)cyclohexane (bisphenol C).

Other carboxylic acid and hydroxyl-functional compounds may be present in the polycondensation reaction mixture in addition to the aforementioned α,β-ethylenically unsaturated dicarboxylic acids (or anhydrides thereof) and diols. In particular, the reaction mixture may comprise:
i) Up to 30 mol.%, based on the number of moles of α,β-ethylenically unsaturated dicarboxylic acids, of saturated dicarboxylic acid or the anhydride thereof. Non-limiting examples of such dicarboxylic acids include oxalic acid, malonic acid, succinic acid, methyl succinic acid, glutaric acid, adipic acid, suberic acid, azelaic acid, sebacic acid and dodecandioic acid.
ii) Up to 30 mol.%, based on the number of moles of α,β-ethylenically unsaturated dicarboxylic acids, of aromatic dicarboxylic acid or the anhydride thereof. Non-limiting examples thereof include phthalic anhydride, orthophthalic acid, isophthalic acid, terephthalic acid, tetrahydrophthalic acid and tetrachlorophthalic acid.
iii) Up to 10 mol.%, based on the number of moles of α,β-ethylenically unsaturated dicarboxylic acids, of dihydroxymonocarboxylic acid, wherein each hydroxyl group of said dihydroxymonocarboxylic acid may independently be primary or secondary hydroxyl.
iv) Up to 10 mol.%, based on the number of moles of diol, of trifunctional and / or tetrafunctional hydroxy compounds, comprising respectively three four aliphatic hydroxyl groups which may each independently be primary or secondary hydroxyl groups. Non-limiting examples of such polyols include trimethylolethane, trimethylolpropane, hexanetriol and pentaerythritol.
v) Up to 5 mol.%, based on the number of moles of diol, of mono-alcohol. Non-limiting examples of such mono-alcohols include benzyl alcohol, phenylethanol, cyclohexanol, 2-ethylhexanol, 2-cyclohexyl ethanol, 2,2-dimethyl-1-propanol and dodecanol.

Having regard to the above described required and optional reactants, it is re-iterated that the polycondensation reaction is characterized by a stoichiometric excess of hydroxyl groups to carboxyl groups. Preferably the stoichiometric excess of hydroxyl groups to carboxyl groups should be from 5 to 40% and more preferably from 5 to 25%.

It is preferred herein for the reaction mixture provided to said polycondensation reaction to be essentially free of solvent: for completeness, this statement of preference includes the initial reaction mixture being essentially free of added water. However, if one elects to perform the reaction in solution, suitable solvents should be non-reactive, essentially anhydrous, organic liquids capable of dissolving at least 1 wt.% and preferably over 10 wt.% of the unsaturated polyester products at 25°C. And as suitable organic solvents there can be mentioned: aromatic hydrocarbons, such as toluene and xylene; aliphatic hydrocarbons, such as heptane and decane; alicyclic hydrocarbons, such as cyclohexane and Decalin; chlorinated hydrocarbons such as chloroform and trichloroethylene; esters, such as ethyl acetate and methyl butyrate; and, ethers, such as tetrahydrofuran (THF) and dioxane.

The polycondensation reaction is typically - and indeed desirably - conducted in the presence of an appropriate catalyst, for which US Patent No. 3,056,818 (Werber) provides an instructive reference. Common catalysts include acid catalysts and organometallic catalysts, with titanium, zirconium and tin alkoxides, carboxylates and chelates being examples of the latter. Preferably, the catalyst is a titanium alkoxide, titanium carboxylate, or titanium chelate catalyst and, more preferably, the catalyst is a titanium alkoxide catalyst.

For completeness, suitable titanium alkoxides include but are not limited to: tetramethyl titanates; tetraethyl titanates; tetrapropyl titanates; tetra-isopropyl titanates; tetrabutyl titanates; tetrapentyl titanates; tetrahexyl titanates; tetra-octyl titanates; tetranonyl titanates; tetradodecyl titanates; tetrahexadecyl titanates; tetra-octadecyl titanates; tetradecyl titanates; tetraheptyl titanates; and, mixtures thereof. The tin or zirconium counterparts of the above alcoholates can be substituted in part as catalysts.

Whilst the determination of an appropriate catalytic amount of a compound is facile to a person of ordinary skill in the art, it is preferred that the catalyst be used in an amount of from 0.1 to 5 wt.%, for instance from 0.1 to 2.0 wt.%, based on the total weight of the reactants.

In synthesizing the unsaturated polyesters in this stage of the present invention, the alcohols, carboxylic acids or derivatives thereof, catalyst(s) and any stabilizer employed, as discussed herein below, are charged to a suitable reaction vessel equipped with a distillation apparatus. That vessel should have been dried and purged with an inert gas - such as nitrogen or argon - prior to its charging and that inert atmosphere may be maintained in the vessel during the reaction. The temperature of the vessel will be set based on lowest boiling point of the reactants, which is conventionally an alcohol: a temperature of from 140 to 230°C or from 180 to 230°C may be considered standard. For an initial duration, the vessel may be maintained at atmospheric pressure but, once no more water distillation is observed, at least a partial vacuum should be applied to the vessel drive the polycondensation reaction to completion.

The reaction may be monitored by analyzing the acid value (Av) of the reactant mixture over time and the reaction typically stopped when that determined acid value is at a value of less than 10 mg KOH/g or ideally less than 3 mg KOH/g or even 1 mg KOH/g. The time to reach this point will be dependent on various factors, such as temperature, catalyst type and the reactants used: it will generally, however, be from 0.5 to 20 hours, for instance from 1 to 8 hours or from 2 to 6 hours.

Whilst this is not critical to its later use in stage ii) of the recited process, the unsaturated polyester (hereinafter denoted as U-PES) may be separated and purified using methods known in the art: mention in this regard may be made of filtration, extraction, evaporation, distillation and chromatography.

As is known in the art, the storage stability of the obtained unsaturated polyester can be enhanced by the addition of particular compounds. Typical stabilizers - which would desirably be present in an amount of from 0.01 to 5 wt.%, based on the total weight of the reactants - may be categorized as: hydroquinone and its alkylated derivatives; phenolic compounds with electron-withdrawing substituents; and, quinoid compounds. And specific examples of such stabilizing compounds, which might be employed alone or in combination, include: 2,3-dichloro-1,4-naphthoquinone; 2,3-dibromo-1,4-naphthoquinone; 2,3-dicyano-1,4-naphthoquinone; 2-chloro-1,4-naphthoquinone; 2-bromo-1,4-naphthoquinone; 2-nitro-1,4-naphthoquinone; 2,3,6,7,8,9-hexachloro-1,4-naphthoquinone; 3-bromo-2-chloro-1,4-naphthoquinone; 1,4-hydroquinone; 4-tertiary-butylcatechol; 4-methoxyphenol; methylhydroquinone; 4-chloro-2-nitrophenol; 2,4-dinitropara-cresol; 2,4-dinitrophenol; and, phenothiazine.

Stabilizers of this kind can be added before, during or after the preparation of the polymer and also, if applicable, to the separated polyester. Further, if desired, the stabilizers can be added in combination with up to 2 wt.%, based on the total weight of the reactants, of one or more known electron donors which form electron-donor-acceptor complexes, such as 1-methylimidazole, 2-methylimidazole, 2-ethyl-4-methylimidazole, 2-heptadecylimidazole, 2-isopropylimidazole, 2-(2-ethyl-4-methylimidazyl)-1-cyanoethane and 2-undecylimidazole.

The unsaturated polyester (U-PES) synthesized in stage i) is desirably characterized by at least one of:
a) an hydroxyl value (OHv) of from 50 to 300 mgKOH/g, preferably from 80 to 200 mgKOH/g;
b) an acid value (Av) of from 0 to 10 mgKOH/g, preferably from 0 to 3 mgKOH/g; and,
c) a calculated double bond equivalent weight of from 100 to 1500 g/eq, preferably from 150 to 850 g/eq.

For completeness, it is noted that these limitations are not mutually exclusive and one, two or three of these characterizations may thus be applicable.

### Synthesis Stage ii)

The second stage of the process of the present invention is constituted by a conjugate addition reaction in which the unsaturated polyester (U-PES) is reacted with at least one polyamine having at least one primary amine group and at least one secondary amine group. The polyamine may be aliphatic, cycloaliphatic, aromatic and / or heterocyclic.

Without intention to limit the present invention, exemplary polyamines containing at least one primary and at least one secondary amino group include: N-methylethylenediamine; N-ethylethylenediamine; N-propylethylenediamine; N-butylethylenediamine; N-benzylethylenediamine; N-phenylethylenediamine; N-methylpropylenediamine; N-ethylpropylenediamine; N-propylpropylenediamine; N-butylpropylenediamine; N-benzylpropylenediamine; N-phenylpropylenediamine; N-hydroxyethylethylenediamine; diethylenetriamine; triethylenetetramine; tetraethylenepentamine; pentaethylenehexamine; bishexamethylenetriamine; N-cyclohexylpropylenediamine; and, N-[3-(tridecyloxy)propyl]-1,3-propanediamine (Adogen 583).

It is here mentioned that there exists a preference for aliphatic and / or cycloaliphatic polyamines and a particular preference for aliphatic and / or cycloaliphatic diamines, both in general and with regard to the above mentioned list of exemplary polyamines.

A sufficient quantity of the at least one polyamine may be reacted with the unsaturated polyesters (U-PES) to produce the amino- and hydroxyl-functional polymer (MF-PES). The total amount of polyamine added is preferably selected so that there is at least a 1.8:1 equivalence ratio of amine groups to C=C double bonds of said unsaturated polyesters (U-PES). An equivalence ratio of amine groups to C=C double bonds of from 1.8: 1 to 2.4:1 or from 1.9:1 to 2.2:1 may be appropriate.

An additional but not mutually exclusive statement of preference as regards the reactant ratios may be as follows. The total amount of polyamine added is selected so that there is at least a 0.9:1 equivalence ratio of primary amine groups to the C=C double bonds of said unsaturated polyesters (U-PES). An equivalence ratio of primary amine groups to C=C double bonds of from 0.9:1 to 1.2:1 may be appropriate.

In synthesizing the amino- and hydroxyl-functional polyesters in this stage of the present invention, the unsaturated polyester and the polyamine are charged to a suitable reaction vessel equipped with a mechanical stirrer. The addition reaction should be conducted under stirring but does not generally require a catalyst: the use of, for instance, a basic catalyst to activate the amine or a Lewis acid to activate the acceptor is not precluded in this stage but is not preferred.

It is preferred that the reaction mixture for this stage of the process be essentially free of solvents: for completeness, this statement of preference includes the reaction mixture being essentially free of water. Whilst not preferred, if one elects to perform the conjugate addition in solution, suitable solvents should be non-reactive, essentially anhydrous, organic liquids capable of dissolving at least 1 wt.% and preferably over 10 wt.% of the derived functional polyester products at 25°C.

Whilst the optimum operating temperature within the reaction vessel may be determined by the skilled artisan through experimentation, a suitable temperature range of from 10° to 100°C may be mentioned, with a preferred temperature range being from 15° to 50°C. It should be noted that room temperature falls within this preferred range. The process pressure is not critical: as such, the reaction can be run at subatmospheric, atmospheric, or super-atmospheric pressures but pressures at or near atmospheric pressure are preferred.

The progress of the conjugate addition reaction can be monitored by Nuclear Magnetic Resonance (NMR) spectroscopy, with reaction completion being deemed to occur when signals associated with the initial carbon to carbon double bonds (C=C) disappear completely. It is considered that the reaction progress might also be monitored by thermal analysis, given that the addition reaction promotes an exotherm and therefore the completion thereof can correspond to the cooling down of the mixture. In any event, the reaction time will typically be from 0.1 to 10 hours, for example from 0.5 to 5 hours.

Whilst this is not critical to its later application, the product (MF-PES) of the addition reaction may be separated and purified using methods known in the art: mention in this regard may be made of extraction, evaporation, distillation and chromatography. Further, a polyester of enhanced storage stability may be obtained by thermally treating the obtained reaction product at a temperature of from 90°C to 120°C for a duration of from 1 to 8 hours, for example from 2 to 6 hours. Where it is intended that the - optionally purified, optionally thermally treated - reaction product (MF-PES) be stored upon production, the polyesters should be disposed in a vessel with an airtight and moisture-tight seal.

The amino- and hydroxyl-functional functional polyesters obtained in accordance with this process are characterized by being fluid and by having at least one terminal hydroxyl group. In accordance with the preferred embodiments of the invention, the derived amino- and hydroxyl-functional polyester (MF-PES) is characterized by at least one of:
i) a weight average molecular weight of from 500 to 5000 g/mol, preferably from 800 to 4000 g/mol;
ii) an amine value (NHv) of from 30 to 350 mg KOH/g, preferably from 40 to 250 mg KOH/g; and,
iii) a total hydroxyl and amine value (or alkaline value, OHv+NHv) of from 50 to 500 mg KOH/g, preferably from 80 to 400 mg KOH/g.

### Coating, Sealant and Adhesive Compositions

As mentioned hereinbefore, the amino- and hydroxyl-functional polyesters (MF-PES) obtained using the process of the present invention can be employed as a reactive component of a curable coating, adhesive or sealant composition. The further reactant(s) of such compositions will generally be one or more multifunctional compounds (H) having at least two functional groups (F) selected from the group consisting of: (i) activated unsaturated groups, such as (meth)acryloyl groups; (ii) activated methylene groups, such as acetoacetate and malonate groups; (iii) epoxy groups; (iv) isocyanate groups; (v) aromatic activated aldehyde groups; (vi) cyclic carbonate groups; and, (vii) acid, anhydride and ester groups, including oxalate esters. Latent compounds, in which the functional groups (F) are blocked but which are activatable under specific physicochemical conditions, are also envisaged as suitable further reactants for the coating, adhesive or sealant compositions.

No particular limitation is imposed on the number of functional groups (F) possessed by the (activated) compound (H): compounds having 2, 3, 4, 5, 6, 7, 8, 9 or 10 functional groups may be used, for instance. Moreover, the reactant compound (H) can be a low-molecular-weight substance - that is its molecular weight is less than 500 g/mol - or an oligomeric or polymeric substance that has a number average molecular weight (Mn) above 500 g/mol. And, of course, mixtures of compounds (H) may be used.

In an embodiment of the coating, adhesive or sealant composition, the reactant compound (H) having at least two functional groups is selected from the group consisting of: polyepoxide compounds; cyclic carbonates; and, polyisocyanates. More particularly, the reactant compound (H) having at least two functional groups is selected from the group consisting of: polyepoxide compounds; and, cyclic carbonates.

Suitable polyepoxide compounds may be liquid, solid or in solution in solvent. Further, such polyepoxide compounds should have an epoxy equivalent weight of from 100 to 700 g/eq, for example from 120 to 320 g/eq. And generally, diepoxide compounds having epoxy equivalent weights of less than 500 or even less than 400 are preferred.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C1-C18 alkyl esters; butadiene diepoxide; polybutadiene diglycidyl ether; vinylcyclohexene diepoxide; and, limonene diepoxide.

Illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

Without intention to limit the present invention, examples of highly preferred polyepoxide compounds for use as compound (H) include: bisphenol-A epoxy resins, such as DER™ 331, and DER™ 383; bisphenol-F epoxy resins, such as DER™ 354; bisphenol-A/F epoxy resin blends, such as DER™ 353; aliphatic glycidyl ethers, such as DER™ 736; polypropylene glycol diglycidyl ethers, such as DER™ 732; solid bisphenol-A epoxy resins, such as DER™ 661 and DER™ 664 UE; solutions of bisphenol-A solid epoxy resins, such as DER™ 671-X75; epoxy novolac resins, such as DEN™ 438; brominated epoxy resins such as DER™ 542; castor oil triglycidyl ether, such as ERISYS™ GE-35H; polyglycerol-3-polyglycidyl ether, such as ERISYS™ GE-38; and, sorbitol glycidyl ether, such as ERISYS™ GE-60.

As examples of suitable cyclic carbonate group-containing monomeric and oligomeric compounds may be mentioned: compounds produced by reacting hydroxyl-functional cyclocarbonates with a polyisocyanate; and, compounds produced by the addition of CO₂ to an epoxy group-containing monomer or oligomer. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840.

The total amount of compounds (H) present in the curable composition is preferably selected so that the molar ratio of amine groups of said functional polyesters (MF-PES) to the functional groups (F) is in the range of from 1:10 to 10:1, for example from 5:1 to 1:5, and is preferably in the range of from 1:2 to 2:1. For example, the molar ratio of amine groups of said functional polyesters (MF-PES) to either epoxy groups or cyclic carbonate groups in the hardening compound (H) may be from 1:2 to 3:2 or from 2:3 to 4:3.

In an alternative expression of the composition, the total amount of compounds (H) is suitably from 0.1 - 50 wt.%, preferably from 0.5 to 40 wt.% and more preferably 1 to 30 wt.%, based on the combined total amount of the multifunctional polyesters (MF-PES) and the compounds (H).

As is standard in the art, the curable composition may comprise additives and adjunct ingredients. Suitable additives and adjunct ingredients include: catalysts; antioxidants; UV absorbers/light stabilizers; metal deactivators; antistatic agents; reinforcers; fillers; antifogging agents; propellants; biocides; plasticizers; lubricants; emulsifiers; dyes; pigments; rheological agents; impact modifiers; adhesion regulators; optical brighteners; flame retardants; anti-drip agents; nucleating agents; wetting agents; thickeners; protective colloids; defoamers; tackifiers; solvents; reactive diluents; and, mixtures thereof. The selection of suitable conventional additives for the composition depends on the specific intended use thereof and can be determined in the individual case by the skilled artisan.

In certain embodiments of the invention, no catalysts will be required to catalyze the reaction of the cyclic amine groups with the functional groups (F) of the compound (H): this may typically be the case where cyclic carbonate groups or epoxy groups are present as the functional groups (F). However, in other cases and preferably where the compound (H) has reactive groups F that are different from said cyclic carbonate or epoxy groups, a catalyst may be required: suitable catalysts for the hardening will then be determined in a known manner dependent upon the type of the reactive functional groups (F). The catalysts, when desired, are used in an amount of from 0.01 to 10 wt.%, preferably from 0.01 to 5 wt.%, based on the total weight of the curable composition.

The curable coating, adhesive or sealant composition should comprise less than 5 wt.% of water, based on the weight of the composition, and is most preferably an anhydrous composition that is essentially free of water. These embodiments do not preclude the composition from either comprising organic solvent or being essentially free of organic solvent.

Broadly, all organic solvents known to the person skilled in the art can be used as a solvent but it is preferred that said organic solvents are selected from the group consisting of: esters; ketones; halogenated hydrocarbons; alkanes; alkenes; and, aromatic hydrocarbons. Exemplary solvents are methylene chloride, trichloroethylene, toluene, xylene, butyl acetate, amyl acetate, isobutyl acetate, methyl isobutyl ketone, methoxybutyl acetate, cyclohexane, cyclohexanone, dichlorobenzene, diethyl ketone, di-isobutyl ketone, dioxane, ethyl acetate, ethylene glycol monobutyl ether acetate, ethylene glycol monoethyl acetate, 2-ethylhexyl acetate, glycol diacetate, heptane, hexane, isobutyl acetate, isooctane, isopropyl acetate, methyl ethyl ketone, tetrahydrofuran or tetrachloroethylene or mixtures of two or more of the recited solvents.

### Methods and Applications

To form a coating, sealant or adhesive composition, the reactive compounds are brought together and mixed in such a manner as to induce the hardening of the binder. More particularly, the amino- and hydroxyl-functional polyesters (MF-PES) and the compounds (H) may be mixed in pre-determined amounts by hand, by machine, by (co-)extrusion or by any other means which can ensure fine and highly homogeneous mixing thereof.

The hardening of the binder compositions of the invention typically occurs at temperatures in the range of from 0°C to 250°C, preferably from 20°C to 240°C, and in particular from 80°C to 200°C. The temperature that is suitable depends on the specific compounds (H) and the desired hardening rate and can be determined in the individual case by the skilled artisan, using simple preliminary tests if necessary. Of course, hardening at temperatures of from 5°C to 35°C or from 20°C to 30°C is especially advantageous as it obviates the requirement to substantially heat or cool the mixture from the usually prevailing ambient temperature. Where applicable, however, the temperature of the mixture of the amino- and hydroxyl-functional polyesters (MF-PES) and the compounds (H) may be raised above the mixing temperature using conventional means, including microwave induction.

The compositions according to the invention may find utility *inter alia* in: varnishes; inks; elastomers; foams; binding agents for fibers and / or particles; the coating of glass; the coating of mineral building materials, such as lime- and / or cement-bonded plasters, gypsum-containing surfaces, fiber cement building materials and concrete; the coating and sealing of wood and wooden materials, such as chipboard, fiber board and paper; the coating of metallic surfaces; the coating of asphalt- and bitumen-containing pavements; the coating and sealing of various plastic surfaces; and, the coating of leather and textiles.

It is also considered that the compositions of the present invention are suitable as pourable sealing compounds for electrical building components such as cables, fiber optics, cover strips or plugs. The sealants may serve to protect those components against the ingress of water and other contaminants, against heat exposure, temperature fluctuation and thermal shock, and against mechanical damage.

By virtue of the fact that the compositions of the present invention are capable of creating a high binding strength in a short time, often at room temperature - particularly where epoxy or cyclic carbonate hardeners (H) are employed - the compositions are optimally used for forming composite structures by surface-to-surface bonding of the same or different materials to one another. The binding together of wood and wooden materials and the binding together of metallic materials may be mentioned as exemplary adhesive applications of the present compositions.

In a particularly preferred embodiment of the invention, the curable compositions are used as solvent-free or solvent-containing lamination adhesives for gluing plastic and polymeric films, such as polyolefin films, poly(methylmethacrylate) films, polycarbonate films and Acrylonitrile Butadiene Styrene (ABS) films.

In each of the above described applications, the compositions may applied by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray. For coating and adhesive applications, it is recommended that the compositions be applied to a wet film thickness of from 10 to 500 µm. The application of thinner layers within this range is more economical and provides for a reduced likelihood of thick cured regions that may- for coating applications - require sanding. However, great control must be exercised in applying thinner coatings or layers so as to avoid the formation of discontinuous cured films.

Various features and embodiments of the disclosure are described in the following examples, which are intended to be representative and not limiting.

### EXAMPLES

The following materials and abbreviations are employed in the Examples:
- MAn:: Maleic anhydride.
- FA:: Fumaric acid.
- Itac:: Itaconic acid.
- AA:: Adipic acid.
- IA:: Isophthalic acid.
- SeA:: Sebacic acid.
- DEG:: Diethyleneglycol.
- TPG:: Tripopyleneglycol.
- EDA:: Ethylendiamine.
- DETA:: Diethylenetriamine.
- TEPA:: Tetraethylenepentamine.
- Bax:: N-Cyclohexyl-1,3-propanediamine, available from TCI America.
- MAPA:: 3-(Methylamino)propylamine.
- TIPT:: Tetra Isopropyl Titanate, available from Connect Chemicals.
- BADGE:: Bisphenol A diglycidyl ether, available from Tocris Bioscience.
- CC-BADGE:: Carbonated (CO₂) bisphenol A diglycidyl ether.
- ERISYS™ GE-38:: Polyglycerol-3-Polyglycidyl Ether, available from CVC Thermoset Specialties.
- CC- ERISYS™ GE-38:: Carbonated (CO₂) Polyglycerol-3-Polyglycidyl Ether.
- PEI:: Polyethylenimine having a weight average molecular weight (Mw) of 800 g/mol, available from Sigma-Aldrich.
- ARMS:: As received Mild Steel.

### Example 1: Synthesis of Unsaturated Polyester (U-PES)

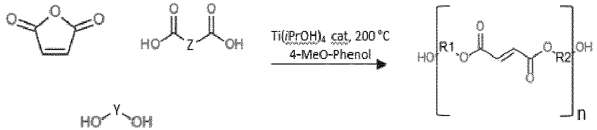

A series of unsaturated polyesters were formed using the following general procedure:
i) In a 3 neck round bottom flask equipped with a distillation set-up and under an N₂ atmosphere, a mixture of unsaturated anhydrides or unsaturated di-acids, glycols (in a molar excess), the catalyst TIPT (0.02 wt%) and the stabilizer 4-methyoxyphenol (0.1-0.4 w. %) was formed, stirred and heated up to 230°C. Optionally, saturated diacids or anhydrides can also be included in the reaction mixture.
ii) When the reaction reached 230°C and no more water distillation was observed, a vacuum was applied to drive the reaction to completion. The reaction was deemed finished when the acid value (Av) was close to zero (Av<3).

The reagents used in this procedure, and the hydroxyl value (OHv) and double bond equivalent weight of the derived unsaturated polyesters is documented in Table 1 below. The hydroxyl value (OHv) was here determined by acetylation reaction with acetic anhydride in pyridine and the double bond content is determined by NMR of the acetylated compound.

**Table 1: Properties of Unsaturated Polyesters (U-PES)**

| **U-PES** | **MAn** | **FA** | **Itac** | **AA** | **IA** | **SeA** | **DEG** | **TPG** | **Hydroxyl Value** | **Double Bond Equivalent Weight** |
|---|---|---|---|---|---|---|---|---|---|---|
| | **(g)** | **(g)** | **(g)** | **(g)** | **(g)** | **(g)** | **(g)** | **(g)** | **(mg KOH/g)** | **(g/eq)** |
| A | 91.0 | | | | | | | 235.3 | 108 | 418 |
| B | 70.0 | | | 32.1 | 36.5 | | | 295.9 | 103 | 605 |
| C | 145.6 | | | | | | 193.0 | | 100 | 244 |
| D | | 148.5 | | | | | 163.2 | | 96 | 312 |
| E | | | 86.9 | | | 102.4 | 162.2 | | 102 | 833 |

### Example 2: Synthesis of amino-functionalized polyesters (NH-PES)

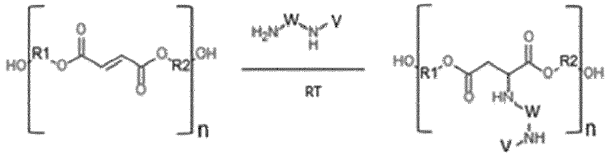

In a second synthetic stage, the addition of amine to the unsaturated polyesters was carried out. The unsaturated polyester and the diamine are mixed at a 1:0.9 ratio (U-PES Double Bond Content: Primary Amine) based upon the functionality of the primary amino group only. An exothermic reaction was observed. The mixture was stirred for 2 hours until completion of the reaction. The completion of the reaction was here confirmed by consumption of double bond by NMR. Traces (≤10%) of remaining double bond are acceptable, considering the mixing ratio.

The reagents used in this procedure, the amine value (NHv) and the viscosity of the derived amine-functional polyesters are documented in Table 2 below.

**Table 2: Amino-Functionalized Polyesters (NH-PES)**

| **NH-PES** | | **U-PES** | **Composition of U-PES** | **Amine** | **State** | **NHv** | **Viscosity** |
|---|---|---|---|---|---|---|---|
| | | | | | | **(mg KOH/g)** | **(25 °C) (Pa·s)** |
| 1A | Invention | A | MAn, TPG | Bax | Fluid | 180 | 102.70 |
| 2A | Invention | A | MAn, TPG | MAPA | Fluid | 216 | 61.00 |
| 3B | Invention | B | MAn, AA, IA, TPG | Bax | Fluid | 135 | 15.78 |
| 4C | Invention | C | MAn, DEG | Bax | Fluid | 120 | 645.05 |
| 5C | Comparative | C | MAn, DEG | EDA | Solid | NA | NA |
| 6C | Comparative | C | MAn, DEG | DETA | Solid | NA | NA |
| 7C | Comparative | C | MAn, DEG | TEPA | Solid | NA | NA |
| 8D | Invention | D | FA, DEG | Bax | Fluid | 223 | NA |
| 9E | Invention | E | Itac, SeA, DEG | Bax | Fluid | 52 | NA |

As noted in Table 2, the products prepared in accordance with the inventive procedure are fluid. Conversely, the products obtained in the comparative, homologous reaction were solid: it is submitted that cross-linking occurs in the comparative examples due to the reactivity of the more than one (>1) primary amino group per molecule of amine in the conjugate addition.

### Example 3: Adhesive Formulations

As shown in Table 3a herein below, two (2) adhesive formulations (AF1-AF2) were prepared by mixing two of the above defined amino functionalized polyesters (Table 4: NH1A, NH3B) with an epoxy resin curing partner (BADGE). The mixtures were prepared at a ratio of [Epoxy groups] : [Primary and Secondary Amino groups] of 1:1 and were cured at 100 °C for 2 hours.

**Table 3a: Adhesive Formulations**

| **Adhesive Formulation** | **Identity of NH-PES** | **NH-PES (g)** | **BADGE (g)** |
|---|---|---|---|
| AF-1 | 1A | 2.5 | 1.579 |
| AF-2 | 3B | 2.5 | 1.076 |

Utilizing these adhesive formulations, lap shear tests were performed according to DIN EN 1465 and using the following substrates: ARMS-ARMS; Polycarbonate, PC-PC; polypropylene-polypropylene, PP-PP; ABS-ABS; and, Beech Wood - Beech Wood. The results of the tests performed at room temperature are shown in Table 3b herein below, wherein: SF means substrate failure; AF means adhesive failure; and, CF means cohesive failure.

**Table 3b: Lap Shear Strength**

| Adhesive Formulation | Curing Conditions | ARMS (MPa) | Polycarbonate (MPa) | PP (MPa) | ABS (MPa) | Beech Wood (MPa) |
|---|---|---|---|---|---|---|
| **AF-1** | 100°C, 2 hours | 5.50 | 4.94 | 0.42 | 1.07 | 3.39 |
| | | AF | SF | AF | AF | AF |
| **AF-2** | 100°C, 2 hours | 1,18 | 2.50 | 0.35 | 0.41 | 0.19 |
| | | CF | CF | CF | CF | AF |

### Example 4: Adhesive Formulations

As shown in Table 4a herein below, three (3) adhesive formulations (AF3-AF5) were prepared by independently mixing two of the above defined amino functionalized polyesters (Table 4: NH1A, NH3B) with 40 mol.% polyethylenimine (PEI, Mw 800) and with the cyclic carbonate terminated resin curing partners: said curing partners were obtained by the addition of CO₂ to epoxide compound. The formulations were prepared at a ratio of [Cyclic Carbonate groups] : [Primary and Secondary Amino groups] of 1:1 and are cured at 130 °C for 20 hours.

**Table 4a: Adhesive Formulations**

| **Adhesive Formulation** | **Identity of NH-PES** | **NH-PES (g)** | **PEI (g)** | **CC-BADGE (g)** | **CC-Erisys GE 38 (g)** |
|---|---|---|---|---|---|
| **AF-3** | **1A** | 0.614 | 0.088 | 0.798 | |
| **AF-4** | **1A** | 0.709 | 0.021 | | 0.770 |
| **AF-5** | **3B** | 0.756 | 0.074 | 0.670 | |

Utilizing these adhesive formulations, lap shear tests were performed according to DIN EN 1465 and using the following substrates: ARMS-ARMS; and, Beech Wood - Beech Wood. The results of the tests performed at room temperature are shown in Table 4b herein below, wherein: SF means substrate failure; AF means adhesive failure; and, CF means cohesive failure.

**Table 4b: Lap Shear Strength**

| **Adhesive Formulation** | **Curing Conditions** | **ARMS (MPa)** | **Beech Wood (MPa)** |
|---|---|---|---|
| **AF-3** | 130 °C, 20 hours | 2.40 | 3.31 |
| | | AF | CF |
| **AF-4** | | 8.62 | 13.67 |
| | | AF | SF |
| **AF-5** | | 2.25 | 3.01 |
| | | AF | CF |

## Claims

1. A method for preparing an amino and hydroxyl-functional polyester, said method comprising:
i) preparing an unsaturated polyester by the polycondensation reaction, optionally in the presence of a catalyst, of reactants comprising or consisting of at least one diol and at least one α,β-ethylenically unsaturated dicarboxylic acid or anhydride thereof, wherein said polycondensation reaction is **characterized by** a stoichiometric excess of hydroxyl groups to carboxyl groups; and,
ii) reacting, by conjugate addition, said unsaturated polyester with at least one polyamine, said polyamine having at least one primary amine group and at least one secondary amine group.

2. The method according to claim 1, wherein the or each reactant diol has a molecular weight of 62 to 5000 g/mol and optionally contains ether groups, ester groups and / or carbonate groups.

3. The method according to claim 1 or claim 2, wherein at least one reactant diol is a polyoxyalkylene glycol.

4. The method according to claim 3, wherein at least one reactant diol is selected from the group consisting of: diethylene glycol; dipropylene glycol; triethylene glycol; tetraethylene glycol; tripropylene glycol; and, tetrapropylene glycol

5. The method according to any one of claims 1 to 4, wherein the or each reactant α,β-ethylenically unsaturated dicarboxylic acid or anhydride thereof has from 4 to 12 carbon atoms.

6. The method according to any one of claims 1 to 5, wherein at least one reactant α,β-ethylenically unsaturated dicarboxylic acid or anhydride is selected from the group consisting of: maleic acid; maleic anhydride; fumaric acid; itaconic acid; and, itaconic anhydride.

7. The method according to any one of claims 1 to 6, wherein the reactants of the polycondensation reaction comprise or consist of:
said at least one diol;
said at least one α,β-ethylenically unsaturated dicarboxylic acid or anhydride thereof;
from 0 to 30 mol.%, based on the number of moles of α,β-ethylenically unsaturated dicarboxylic acids, of saturated dicarboxylic acid or the anhydride thereof;
from 0 to 30 mol.%, based on the number of moles of α,β-ethylenically unsaturated dicarboxylic acids, of aromatic dicarboxylic acid or the anhydride thereof;
from 0 to 10 mol.%, based on the number of moles of α,β-ethylenically unsaturated dicarboxylic acids, of dihydroxymonocarboxylic acid, wherein each hydroxyl group of said dihydroxymonocarboxylic acid may independently be primary or secondary hydroxyl;
from 0 to 10 mol.%, based on the number of moles of diol, of trifunctional and / or tetrafunctional hydroxy compounds; and
from 0 to 5 mol.%, based on the number of moles of diol, of mono-alcohol.

8. The method according to any one of claims 1 to 7, wherein the polycondensation reaction is conducted in the presence of a stabilizer for the unsaturated polyester, said stabilizer preferably being selected from the group consisting of: 2,3-dichloro-1,4-naphthoquinone; 2,3-dibromo-1,4-naphthoquinone; 2,3-dicyano-1,4-naphthoquinone; 2-chloro-1,4-naphthoquinone; 2-bromo-1,4-naphthoquinone; 2-nitro-1,4-naphthoquinone; 2,3,6,7,8,9-hexachloro-1,4-naphthoquinone; 3-bromo-2-chloro-1,4-naphthoquinone; 1,4-hydroquinone; 4-tertiary-butylcatechol; 4-methoxyphenol; methylhydroquinone; 4-chloro-2-nitrophenol; 2,4-dinitropara-cresol; 2,4-dinitrophenol; phenothiazine; and, mixtures thereof.

9. The method according to any one of claims 1 to 8, wherein said unsaturated polyester prepared in stage i) is **characterized by** at least one of:
d) an hydroxyl value (OHv) of from 50 to 300 mgKOH/g, preferably from 80 to 200 mgKOH/g;
e) an acid value (Av) of from 0 to 10 mgKOH/g, preferably from 0 to 3 mgKOH/g; and,
f) a calculated double bond equivalent weight of from 100 to 1500 g/eq, preferably from 150 to 850 g/eq.

10. The method according to any one of claims 1 to 9, wherein the or each reactant polyamine having at least one primary amine group and at least one secondary amine group is selected from the group consisting of aliphatic polyamines, cycloaliphatic polyamines and mixtures thereof.

11. The method according to any one of claims 1 to 10, wherein at least one reactant polyamine has one primary amine group and one secondary amine group and is preferably selected from the group consisting of aliphatic diamines, cycloaliphatic diamines and mixtures thereof.

12. The method according to any one of claims 1 to 11, wherein the reactant polyamine is provided to said conjugate addition reaction in an amount such that the equivalence ratio of primary amine groups to C=C double bonds of the unsaturated polyester is in the range from 0.9: 1 to 1.2:1.

13. The method according to any one of claims 1 to 12, wherein the reactant mixtures provided to said polycondensation reaction and / or said conjugate addition reaction are essentially free of solvent.

14. An amino- and hydroxyl-functional polyester obtained by the process as defined in any one of claims 1 to 13, said polyester preferably being **characterized by** at least one of:
iv) a weight average molecular weight of from 500 to 5000 g/mol, preferably from 800 to 4000 g/mol;
v) an amine value (NHv) of from 30 to 350 mg KOH/g, preferably from 40 to 250 mg KOH/g; and,
vi) a total hydroxyl and amine value (or alkaline value, OHv+NHv) of from 50 to 500 mg KOH/g, preferably from 80 to 400 mg KOH/g.

15. A curable coating, adhesive or sealant composition comprising:
an amino- and hydroxyl-functional polyester as defined in claim 14; and,
at least one multifunctional compound (H) having at least two functional groups (F) selected from the group consisting of: epoxy groups; isocyanate groups; and, cyclic carbonate groups.
